(19)

Europäisches Patentamt
European Patent Office
Office européen des brevets

(11) **EP 2 476 597 A1**

(12) **EUROPEAN PATENT APPLICATION**

(43) Date of publication:
**18.07.2012 Bulletin 2012/29**

(51) Int Cl.:
**B60W 30/14** *(2006.01)* **B60W 30/18** *(2012.01)*
**B60W 50/08** *(2012.01)*

(21) Application number: **11150712.5**

(22) Date of filing: **12.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Harman Becker Automotive Systems
GmbH
76307 Karlsbad (DE)**

(72) Inventor: **Scholl, Kay-Ulrich
76307, Karlsbad (DE)**

(74) Representative: **Schwarz, Markku
Kraus & Weisert
Patent- und Rechtsanwälte
Thomas-Wimmer-Ring 15
80539 München (DE)**

(54) **Energy efficient driving**

(57)     For supporting energy efficient driving, a system comprises a route information obtaining device (10), e.g., implemented by a navigation system, a monitoring device (20) and a controller (50). The route information obtaining device (10) is configured to obtain route information describing a route to be taken by a vehicle. The route information comprises speed limit information on an upcoming speed limit. The monitoring device (20) is configured to determine a current velocity of the vehicle. The controller (50) is configured to determine, depending on the speed limit information and the current velocity of the vehicle, a process for decelerating the vehicle in such a way that the vehicle can be decelerated to a target velocity, defined by the upcoming speed limit, by reducing a drive force of the vehicle.

FIG. 1

**Description**

Technical Field

The present application relates to systems and methods for driving a vehicle in an energy efficient manner.

Background Art

The reduction of energy consumption in vehicles, for example cars, has become more and more important in the recent years. Besides optimizing the construction of vehicles, such that driving them consumes less energy, also the driving behaviour plays an important role in energy consumption. For example, driving at very high velocities or driving with frequent accelerations and decelerations tends to be more energy consuming than driving at a lower velocity, in particular a constant velocity.

Generally, driving in an anticipating manner is considered to be energy efficient since it may help to avoid accelerations and subsequent braking. However, the driver of a vehicle sometimes only has rudimentary information for anticipating the impact of future driving maneuvers on the resulting energy consumption.

Therefore, there is a need for systems and methods which allow for supporting a driver in driving in an anticipating manner so as to reduce energy consumption of the vehicle.

Short Summary of the Invention

According to some embodiments of the present invention, the above need is addressed by a method and a system as defined in the independent claims. The dependent claims define further embodiments.

According to an embodiment, a method is provided. The method comprises obtaining route information describing a route to be taken by a vehicle, e.g., from a navigation system. The route information comprises speed limit information on an upcoming speed limit. The speed limit may be a maximum allowed speed or may be a maximum recommended speed. The speed limit may also be a stop sign or other element requiring the vehicle to stop, i.e., reduce its velocity to zero. The method further comprises determining a current velocity of the vehicle. Depending on the speed limit information and the current velocity of the vehicle, a process for decelerating the vehicle is determined. The process is determined in such a way that the vehicle can be decelerated to a target velocity, defined by the upcoming speed limit, by reducing a drive force of the vehicle. In this way, the upcoming speed limit information can be utilized to avoid braking to comply with the upcoming speed limit, thereby increasing energy efficiency of driving.

According to an embodiment, the reducing of the drive force corresponds to freewheeling of the vehicle. In particular, the drive force of the vehicle may be reduced to zero, allowing the velocity of the vehicle to decrease to the target velocity without active braking, which is highly desirable in view of energy efficiency. According to an embodiment, freewheeling may involve disengaging a clutch of the vehicle. According to other embodiments, freewheeling may be accomplished while leaving the clutch engaged. In this way, a motor of the vehicle will be driven by the freewheeling of the vehicle, and the amount of power supplied to the motor of the vehicle may be reduced to zero without stopping the motor.

According to an embodiment, the reducing of the drive force corresponds to reducing power supplied to a motor of the vehicle, which may be accomplished by reducing the amount of fuel supplied to a fuel driven motor and/or by reducing the amount of electrical energy supplied to an electric motor.

According to an embodiment, the process for decelerating the vehicle defines a target point for reducing the drive force. The target point may be a target point of time at which the drive force is reduced or a target position of the vehicle at which the drive force is reduced. The target point may be indicated to the driver or used as a basis for automatically controlling the drive force, thereby assisting in driving in an anticipating manner. According to an embodiment, the target point for reducing the drive force is calculated in an iterative process. Alternatively, the target point may also be determined from a velocity profile associated with the upcoming speed limit.

According to an embodiment, the route information comprises a height profile of the route and the process for decelerating the vehicle is determined depending on the height profile of the route. For example, the target point and/or the target course for reducing the drive force may be determined depending on the height profile of the route.

According to an embodiment, the method comprises instructing a driver of the vehicle to reduce the drive force in accordance with the determined process for decelerating the vehicle. For example, indications may be provided to the driver so as to guide the driver in reducing the drive force according to the determined process.

According to an embodiment, the method comprises automatically controlling the drive force in accordance with the determined process for decelerating the vehicle.

According to an embodiment, the driver may select between the option of being instructed and the option of automatically controlling the drive force. According to a further embodiment, a system is provided. The system comprises a route information obtaining device, a monitoring device and a controller. The route information obtaining device is configured to obtain route information describing a route to be taken by a vehicle. The route information comprises speed limit information on an upcoming speed limit. The monitoring device is configured to determine a current velocity of the vehicle. The controller is configured to determine, depending on the speed limit information and the current velocity of the vehicle, a process for decelerating the vehicle in such a way that the vehicle can be decelerated to a target velocity, defined by the upcoming speed limit, by reducing a drive force of the vehicle. In this way, the upcoming speed limit information can be utilized to avoid braking to comply with the upcoming speed limit, thereby increasing energy efficiency of driving.

According to an embodiment, the system comprises an output device for providing instructions to a driver of the vehicle and the controller is configured to control the output device to output an instruction to reduce the drive force in accordance with the determined process for decelerating the vehicle.

According to an embodiment, the controller is configured to control a motor of the vehicle to reduce the drive force in accordance with the determined process for decelerating the vehicle.

According to an embodiment, the route information obtaining unit comprises a navigation system or is implemented by a navigation system.

The system may be configured to perform the method according to any one of the above-described embodiments.

According to a further embodiment, a vehicle is provided which comprises a system according to any one of the above-described embodiments.


Brief Description of the Drawings

Embodiments of the invention will be described with reference to the accompanying drawings.

Fig. 1 is a schematic block diagram illustrating a system according to an embodiment of the invention.

Fig. 2 shows a flowchart illustrating an embodiment of a method according to an embodiment of the invention.

Fig. 3 is a diagram for schematically illustrating an exemplary process of decelerating a vehicle.

Fig. 4 is a diagram representing an exemplary course of freewheeling distance as a function of a vehicle's velocity.

Fig. 5 is a flowchart for illustrating an iterative process for determining the freewheeling distance as used in an embodiment of the invention.

Fig. 6 is a diagram for schematically illustrating a further exemplary process of decelerating a vehicle.

Detailed Description of Preferred Embodiments

Embodiments of the invention will be described with reference to the drawings. It should be noted that features of different embodiments described herein may be combined with each other unless specifically stated otherwise.

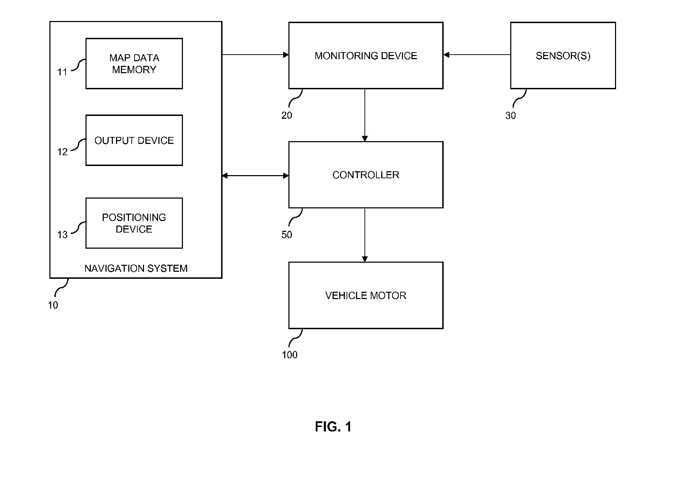

In Fig. 1, an embodiment of a system in a vehicle is shown. The system comprises a navigation system 10, a monitoring device 20 and a controller 50. The navigation system 10 comprises a map data memory 11, an output device 12, and a positioning device 13. The map data memory 11 may store map data, including courses of roads, speed limits on these roads, and height profiles of the roads. The output device 12 may comprise a video output device such as a display and/or an audio output device such as a loudspeaker. The positioning device 13 is configured to determine the current position of the vehicle, e.g., in terms of geographical coordinates which may then be related to the map data stored in the map data memory 11. The positioning device 13 may for example operate on the basis of a satellite positioning system, such as the Global Positioning System (GPS). However, other types of positioning system may be used as an alternative or in addition. Further, Fig. 1 shows a vehicle motor 100 and one or more sensors 30 provided in the vehicle. The one or more sensors 30 may include, e.g., a speed sensor or an orientation sensor.

In the illustrated embodiment, the vehicle may be any type of automotive vehicle. For example, the vehicle may be fuel driven. In this case, the vehicle motor 100 would be a combustion engine. The vehicle may also be an electric vehicle. In this case, the vehicle motor 100 would be an electric motor. Further, the vehicle may also be a hybrid vehicle. In this case, the vehicle motor 100 would be a combination of a combustion engine and an electric motor.

In the illustrated embodiment, the controller 20 receives information regarding a route to be taken by the vehicle from the navigation system 10. For example, the navigation system 10 in the illustrated embodiment comprises the map data memory 11, from which for example information regarding slopes, curves in the roads, upcoming speed limits, upcoming congestions or the like can be retrieved. In the illustrated embodiment, the information regarding the route to be taken, which is supplied from the navigation system 10 to the controller 50, specifically includes information on an upcoming speed limit. The upcoming speed limit may be a maximum allowed speed, e.g., within an urban area, or may be a maximum recommended speed, e.g., in a narrow turn. Further, the upcoming speed limit may also be associated with other elements, e.g., a stop sign or the like. In addition, the controller 50 also receives a current velocity of the vehicle from the monitoring device 20. The monitoring device 20 may determine the current velocity of the vehicle on the basis of information received from the navigation system 10 and/or on the basis of information received from the one or more sensors 30. From the upcoming speed limit and the current velocity, the controller 50 determines a process for decelerating the vehicle. This is accomplished in such a way that the vehicle can be decelerated to a target velocity defined by the upcoming speed limit by reducing a drive force of the vehicle, which typically involves reducing power supplied to the vehicle motor, e.g., in the form of fuel or electrical energy, and is preferably accomplished by freewheeling, without any active braking. Freewheeling may involve disengaging a clutch of the vehicle or be accomplished while leaving the clutch engaged. In the latter case, the vehicle motor 100 will be driven by the freewheeling of the vehicle, and the amount of power supplied to the vehicle motor 100 may be reduced to zero without stopping the vehicle motor 100. This is particularly beneficial in the case of a fuel driven vehicle motor 100 because fuel consumption in an idle mode of the vehicle motor 100 can be avoided. The controller 50 may then instruct to a driver of the vehicle in accordance with the determined process, for example via outputting one or more instructions via the output device 12 of the navigation system 10. The instructions may be output as visual indications on a display and/or as audio messages via a loudspeaker. The instructions may include when and/or in which way to reduce the drive force of the vehicle. As an alternative or in addition, the controller 50 may also directly control the drive force of the vehicle motor 100 in accordance with the determined process. In some embodiments, the driver may select between the option of being instructed and the option of automatically controlling the drive force.

The process for decelerating the vehicle may define a target point for reducing the drive force. The target point may be a target point of time at which the drive force is reduced or a target position of the vehicle at which the drive force is reduced. When the target point is reached, e.g., as indicated by a timer or by the current position of the vehicle determined by the navigation system, an instruction to reduce the drive force may be provided to the driver by the controller 50, e.g., using the output device 12 of the navigation system 10. In particular, the driver may be instructed to start freewheeling. Alternatively and/or in addition, the controller 50 may directly control the drive force via a respective control signal to the vehicle motor 100. For example, the controller 50 may set the vehicle motor 100 into a freewheeling mode in which the drive force is set to zero and optionally also a clutch of the vehicle is disengaged. In some embodiments, the system, e.g. the controller, may provide a selector by means of which the driver can select between the option of being instructed to reduce the drive force and the option of automatically controlling the drive force.

In some embodiments, the process for decelerating the vehicle may also define a target course of the drive force, e.g., reduction of the drive force to zero according to a linear slope or in a step-like manner. The controller 50 may indicate the target course to the driver by instructions, e.g., using the output device 12, or use the target course as a basis for automatically controlling the drive force via the control signal to the vehicle motor 100.

The embodiment shown in Fig. 1 serves merely as an example, and other implementations are possible as well. For example, the controller 50 and/or the monitoring device 20 need not be provided as separate elements, but may for example be implemented by a microprocessor of navigation system 10.

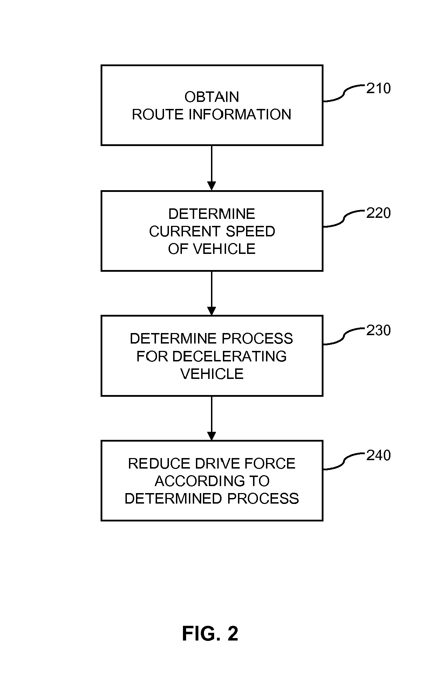

In Fig. 2, a flowchart illustrating a method according to an embodiment is shown. The method depicted in Fig. 2 may be implemented in the system shown in Fig. 1, but may also be implemented independently therefrom.

At 210, route information describing a route to be taken by a vehicle is obtained, e.g., by a controller such as the controller 50 of Fig. 1. The route information comprises information on an upcoming speed limit. In some embodiments, the route information may also comprise information on a height profile of the route. The route information may be obtained from a navigation system, e.g., the navigation system 10 of Fig. 1.

At 220, a current velocity of the vehicle is determined. This may be accomplished on the basis of information received from a navigation system, e.g., the navigation system 10 of Fig. 1, or on the basis of information from one or more vehicle sensor, e.g., the sensors 30 of Fig. 1. The current velocity of the vehicle may be determined by a monitoring device, e.g., the monitoring device 20 of Fig. 1.

At 230, a process for decelerating the vehicle is determined, e.g., by a controller such as the controller 50 of Fig. 1. The process is determined on the basis of the determined current velocity of the vehicle and on the basis of the upcoming speed limit indicated by the route information. This determination may also involve checking whether the determined current velocity actually exceeds a target velocity defined by the upcoming speed limit. If this is not the case, it may be determined that no deceleration is necessary. The process for decelerating the vehicle is determined in such a way that the vehicle can be decelerated to the target velocity defined by the upcoming speed limit by reducing the drive force of the vehicle, which is preferably accomplished by freewheeling of the vehicle, without any active braking. Freewheeling may involve disengaging a clutch of the vehicle or be accomplished while leaving the clutch engaged. In the latter case, a motor of the, e.g., the vehicle motor 100, will be driven by the freewheeling of the vehicle, and the amount of power supplied to the motor may be reduced to zero without stopping the motor. This is particularly beneficial in the case of a fuel driven motor because fuel consumption in an idle mode of the motor can be avoided. The process for decelerating the vehicle may define a target point at which the drive force is reduced. The target point may be calculated in an iterative manner or on the basis of a velocity profile associated with the upcoming speed limit.

At 240, the drive force is reduced according to the determined process. This may involve that the driver is instructed to reduce the drive force in accordance with the determined process and/or that a vehicle motor is automatically controlled in accordance with the determined process.

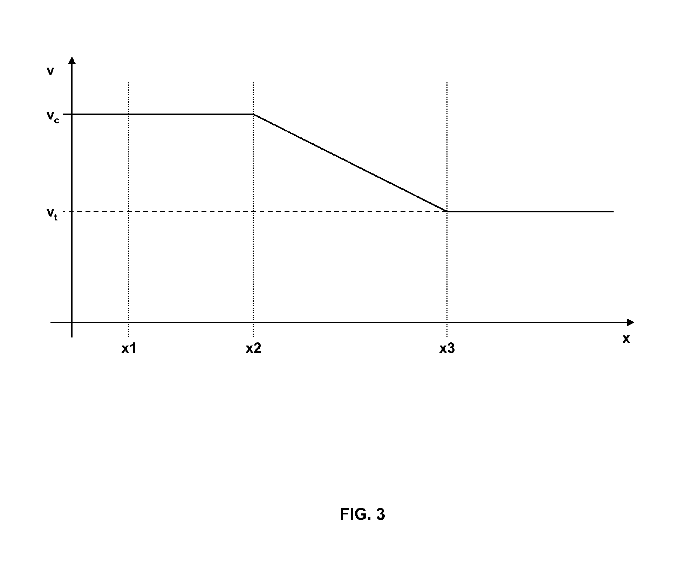

In Fig. 3, an exemplary process for decelerating the vehicle is illustrated. The diagram of Fig. 3 shows the vehicle speed, designated as v, as a function of the vehicle position, designated as x. It is assumed that at position x3 there is an upcoming speed limit which defines a target speed $v_t$ to be reached by the vehicle at position x3. The upcoming speed limit may define a maximum allowed speed as indicated by a speed limit sign or by the beginning of a urban area. The upcoming speed limit may also define a maximum recommended speed, e.g., due to certain road conditions such as a narrow turn. The upcoming speed limit may also be due to a stop sign or other element requiring that the vehicle reduces its velocity to zero.

In the simple example of Fig. 3, it is assumed that the vehicle moves with a current velocity $V_c$ exceeding the velocity allowed after x3 and therefore has to decelerate. In an embodiment, by using freewheeling to decelerate the vehicle, freewheeling has to start at x2 to reach the target velocity $v_t$ at x3. Accordingly, x2 corresponds to a target point for reducing the drive force. The difference between the position x3 and the position x2 is herein also referred to as a freewheeling distance. Therefore, in an embodiment at x1, i.e., a predetermined distance or predetermined time prior to reaching x2, the driver of the vehicle is instructed that freewheeling should start at x2. At x2, a further indication may be provided to the driver that freewheeling should start now. Alternatively, only the indication at x2 may be provided to the driver. In some embodiments, the vehicle may be automatically controlled into a freewheeling mode at x2, which may be accomplished without providing any indication to the driver. It is to be understood that other processes for decelerating the vehicle than freewheeling could be used as well, e.g., processes in which the drive force of the vehicle is reduced to a non-zero value.

As can be taken from the example of Fig. 3, the freewheeling distance may be used to determine a target point for reducing the drive force of the vehicle. That is to say, if in the example of Fig. 3 the position x3 of the upcoming speed limit is known, the position x2 at which freewheeling should start can be determined from the freewheeling distance. In the following, a process for determining the freewheeling distance, referred to as FWD, from the current velocity and taking into account a height profile of the vehicle route up to the upcoming speed limit will be further explained in the following.

Initially, a simplified physical model of the vehicle will be explained. The physical model is derived from the physical equation of motion

$$F = ma ,\qquad\qquad\qquad\qquad (1)$$

where m is the mass of the vehicle, a is the acceleration of the vehicle, and F is the force applied to the vehicle.

The force may be assumed to consist of two main components, a drive force $F_d$ and drag forces. The drive force is provided by the vehicle motor 100 and typically causes the velocity of the vehicle to increase or at least remain constant. At a given velocity v of the vehicle, the drive force $F_d$ can be estimated from a drive power $P_d$ of the vehicle motor 100 as:

$$F_d = \frac{P_d}{v} .\qquad\qquad\qquad\qquad (2)$$

The drag forces typically counteract the drive force and slow down the vehicle. Examples of drag forces are power drain drag $F_p$, wheel drag $F_w$, aerodynamic drag $F_a$, and gradient drag $F_{gr}$.

The power drain drag may be defined by the power loss between vehicle motor and wheels. In typical vehicles, it can be assumed to be about 10% to 20% of the drive power $P_d$. Because the power drain drag is a substantially constant fraction of the drive force, it may be considered as a part of a degree of efficiency of the vehicle motor 100 and not further taken into account in the following discussion.

The wheel drag is mainly caused by the deformation of the wheel during rotation. It depends on the weight force Fz acting on the wheels. It can be approximated wheel as:

$$F_w = f_w F_z ,\qquad\qquad (3)$$

where $f_w$ is a factor which is about 0.01 to 0.02 for typical cars.

On a road having a gradient $\alpha$, the weight force $F_z$ is given by

$$F_z = \cos(\alpha) mg ,\qquad\qquad (4)$$

where g denotes the earth gravity acceleration.

The mass m of a typical car is about 2000 kg. Accordingly, $F_z$ on a horizontal road, i.e., with $\alpha=0$, would be about 20 kN.

Assuming a constant pressure of about 1 bar and a constant temperature of about 15°C, the aerodynamic drag $F_a$ can be approximated as

$$F_a = \frac{1}{2} C_d A \rho v^2 ,\qquad\qquad (5)$$

where $C_d$ is the drag coefficient and A is the reference area of the vehicle. For a typical car, $C_d$ may be about 0,3 and A may be about 2,3 m$^2$. Accordingly, for such a typical car $F_a$ may be approximated as

$$F_a = 0{,}3\frac{\mathbf{kg}}{\mathbf{m}}v^2 .\qquad\qquad (6)$$

The gradient drag $F_{gr}$ is due to the height profile of the road the vehicle moves on. On an uphill road, gravity will tend to accelerate the vehicle, while on a downhill road, gravity will tend to decelerate the vehicle. The gradient drag $F_{gr}$ can be expressed as

$$F_{gr} = F_g \sin(\alpha) ,\qquad\qquad (7)$$

where Fg=mg is the gravity force acting on the mass m of the vehicle and $\alpha$ is the gradient of the road.

The equation of motion of the vehicle as given by equation (1) can thus be rewritten as:

$$F_d - F_w - F_a - F_{gr} = ma ,\qquad\qquad (8)$$

which results in

$$F_d = mg(f_w \cos(\alpha) + \sin(\alpha)) + \frac{1}{2} C_d A v^2 + ma. \tag{9}$$

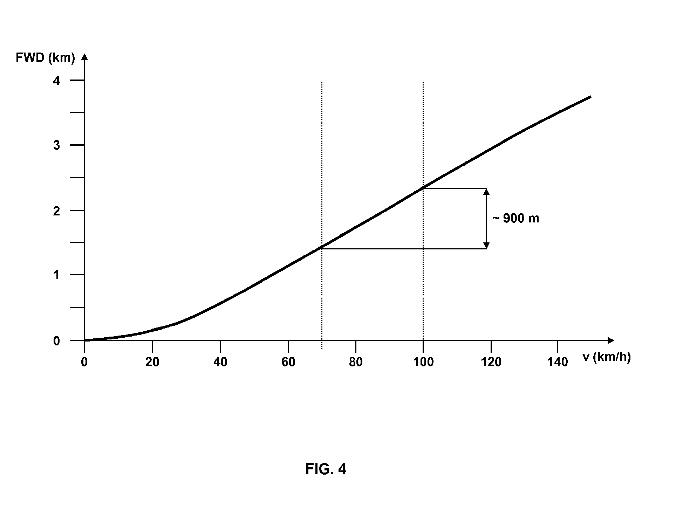

Fig. 4 shows the freewheeling distance FWD as a function of the velocity as calculated the above simple model when assuming a horizontal road, i.e., $\alpha=0$, and the above-mentioned values for a typical car. The velocity profile v(x) of Fig. 4 represents the FWD for a deceleration to zero velocity. However, the FWD for a deceleration to another target velocity can be taken from Fig. 4 as well by measuring the difference between the represented FWD of the current velocity and the represented FWD of the target velocity. For example, Fig. 4 shows that decelerating from a current velocity of about 120 km/h to a target velocity of about 70 km/h by freewheeling takes about 900 m. Accordingly, freewheeling would need to start at about 900 m ahead of the position of the upcoming speed limit. The velocity profile of Fig. 4 may be generally used to determine the FWD on horizontal road sections. It may therefore be associated with speed limits in substantially horizontal road sections.

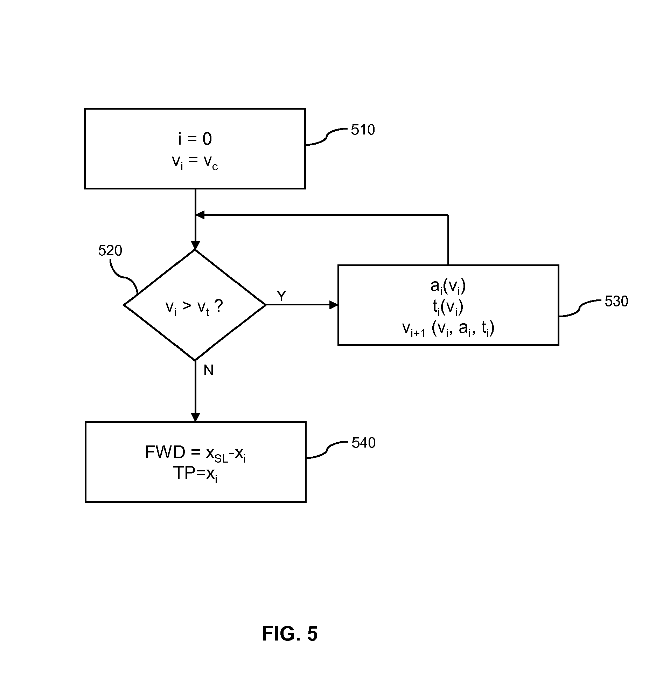

For height profiles of the road to the upcoming speed limit which are not simply horizontal, the velocity of the freewheeling vehicle will vary according to the height profile. In this case, the velocity profile v(x) can be obtained by solving equation (9). However, since an exact solution is not always possible, in the following an iterative process of determining the FWD will be explained in connection with Fig. 5.

The process of Fig. 5 is based on dividing the path from the vehicle's current position to the position of the upcoming speed limit into equidistant sections, denoted by index i. In the illustrated example, each section has a length of 1 m. However, other lengths of the sections may be used as well. In some scenarios also variable lengths of the sections may be used. The gradient $a_i$, velocity $v_i$, and acceleration $\alpha_i$ is considered to be constant in each section.

As shown at 510, in the first iteration, i.e., for the section with i=0, the velocity $v_i$ is set to the current velocity $v_c$ of the vehicle.

As shown at 520, it is determined whether the velocity $v_i$ in the section of the present iteration exceeds the target velocity $v_t$, i.e., the velocity corresponding to the upcoming speed limit. If this is the case, as indicated by branch "Y", the process continues at 530.

At 530, the acceleration $a_i$ is calculated from the velocity $v_i$ for the section of the present iteration. For this purpose, equation (9) may be rewritten to

$$a_i(v_i) = -g(f_w \cos(\alpha_i) + \sin(\alpha_i)) + \frac{C_d A}{2m} v_i^2. \tag{10}$$

Further, also the time the vehicle spends in the section of this iteration is calculated, which may be accomplished using the relation

$$t_i(v_i) = \frac{\Delta x_i}{v_i}, \tag{11}$$

where $\Delta x_i$ is the length of the section, i.e., $\Delta x_i=1$ m in the illustrated example.

Further, the velocity $v_i+1$ for the section of the next iteration is estimated using the relation

$$v_{i+1}(a_i, v_i, t_i) = v_i + a_i t_i. \tag{12}$$

The process then proceeds to the next iteration, in which the determination at 520 and subsequent steps are repeated.

If in an iteration the determination at 520 yields that the velocity $v_i$ in the section of the present iteration does not exceed the target velocity $v_t$, as indicated by branch "N", the process continues at 540, where the position $x_i$ corresponding to the section of the current iteration is determined as target point (TP) at which freewheeling has to start in order to decelerate to the target velocity $v_t$. The FWD then corresponds to the position of the upcoming speed limit $x_{SL}$ minus the position $x_i$ of the current iteration.

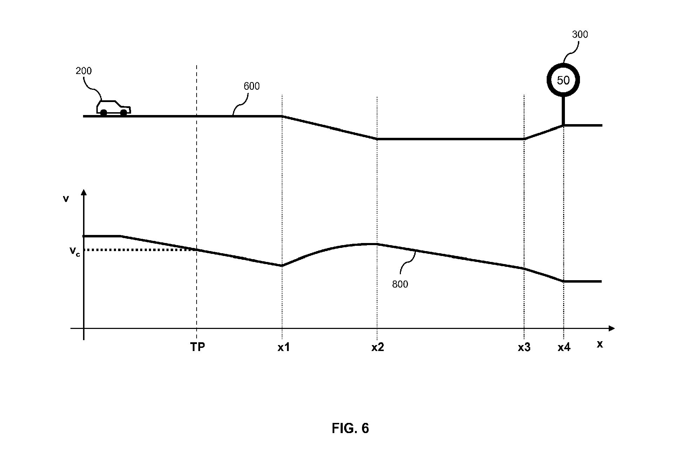

Accordingly, the target point for freewheeling when approaching the upcoming speed limit can be calculated by an iterative process. Here, it should be noted that for roads with varying gradient the FWD has to be iteratively recalculated for each point or section between the upcoming speed limit and the vehicle's current position. Another way of determining the target point for freewheeling is to use a backward velocity profile for decelerating by freewheeling to the desired target velocity. This is further illustrated by Fig. 6.

In Fig. 6, a further exemplary process of decelerating the vehicle is illustrated. In Fig. 6, the height profile of a road is shown as curve 600 depending on the vehicle's position x. In the illustrated example, the height profile comprises a horizontal section (up to position x1), in which the vehicle 200 is initially located, followed by a downhill section (between position x1 and x2), a further horizontal section (between position x2 and x3), and an uphill section (between position x3 and x4). The upcoming speed limit, in the illustrated example a speed limit sign 300, is located at the end of the uphill section (at position x4).

Starting at the position of the upcoming speed limit, i.e., at position x4, the TP for freewheeling can be determined by calculating the backward velocity profile of the freewheeling vehicle 200 under the assumption that the velocity of vehicle 200 at the position of the upcoming speed limit corresponds to the desired target velocity, i.e., to the speed limit. In Fig. 6, the backward velocity profile is shown by curve 800. The target point TP for freewheeling can be determined as the intersection of the backward velocity profile with the horizontal line representing the current velocity of the vehicle 200. Since the backward velocity profile does not depend on the current velocity $v_c$ of the vehicle 200, it could be precalculated and stored in the map data in association with the speed limit.

It should be noted that the examples as explained above only serve to illustrate concepts according some embodiments of the present invention and are not to be construed as limiting. In particular, the discussed concepts may also be used in other scenarios or in connection with vehicles having different characteristics. Therefore, the scope of the present application is not limited to the examples and embodiments described above.

## Claims

1. A method, comprising:

    obtaining route information describing a route to be taken by a vehicle, said route information comprising speed limit information on an upcoming speed limit;
    determining a current velocity of the vehicle; and
    depending on the speed limit information and the current velocity of the vehicle, determining a process for decelerating the vehicle in such a way that the vehicle can be decelerated to a target velocity, defined by the upcoming speed limit, by reducing a drive force of the vehicle.

2. The method according to claim 1,
    wherein said reducing of the drive force corresponds to freewheeling of the vehicle.

3. The method according to claim 1 or 2,
    wherein said reducing the drive force corresponds to reducing power supplied to a motor of the vehicle.

4. The method according to any one of the preceding claims,
    wherein said process for decelerating the vehicle defines a target point for reducing the drive force.

5. The method according to claim 4,
    wherein said target point is iteratively calculated.

6. The method according to claim 4,
    wherein said target point is determined from a velocity profile associated with the upcoming speed limit.

7. The method according to any one of the preceding claims,
    wherein the route information further comprises a height profile of the route, and
    wherein the process for decelerating the vehicle is determined depending on the height profile of the route.

8. The method according to any one of the preceding claims, comprising:

    instructing a driver of the vehicle to reduce the drive force in accordance with the determined process for decelerating the vehicle.

9. The method according to any one of the preceding claims, comprising:

    automatically controlling the drive force in accordance with the determined process for decelerating the vehicle.

10. A system, comprising:

    - a route information obtaining device (10) configured to obtain route information describing a route to be taken by a vehicle, said route information comprising speed limit information on an upcoming speed limit,
    - a monitoring device (20) configured to determine a current velocity of the vehicle; and
    - a controller (50) configured to determine, depending on the speed limit information and the current velocity of the vehicle, a process for decelerating the vehicle in such a way that the vehicle can be decelerated to a target velocity defined by the upcoming speed limit by reducing a drive force of the vehicle.

11. The system according to claim 10, comprising:

    an output device (12) for providing instructions to a driver of the vehicle;
    wherein said controller (50) is configured to control the output device (12) to output an instruction to reduce the drive force in accordance with the determined process for decelerating the vehicle.

12. The system according to claim 10 or 11,
    wherein said controller (50) is configured to control a motor (100) of the vehicle to reduce the drive force in accordance with the determined process for decelerating the vehicle.

13. The system according to any one of claims 10 to 12,
    wherein said route information obtaining device (10) comprises a navigation system.

14. The system according to any one of claims 10 to 12,
    wherein said system is configured to perform the method of any one of claims 1 to 9.

15. A vehicle, comprising a system according to any one of claims 10 to 14.

EP 2 476 597 A1

FIG. 1

10

OBTAIN
ROUTE INFORMATION —210

DETERMINE
CURRENT SPEED
OF VEHICLE —220

DETERMINE PROCESS
FOR DECELERATING
VEHICLE —230

REDUCE DRIVE FORCE
ACCORDING TO
DETERMINED PROCESS —240

**FIG. 2**

FIG. 3

FIG. 4

i = 0
$v_i = v_c$

510

520

$v_i > v_t$ ?

Y

$a_i(v_i)$
$t_i(v_i)$
$v_{i+1}(v_i, a_i, t_i)$

530

N

FWD = $x_{SL}$-$x_i$
TP=$x_i$

540

**FIG. 5**

FIG. 6

Europäisches
Patentamt

European
Patent Office

Office européen
des brevets

# EUROPEAN SEARCH REPORT

Application Number

EP 11 15 0712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 923 291 A2 (BOSCH GMBH ROBERT [DE]) 21 May 2008 (2008-05-21) * the whole document * ----- | 1-15 | INV. B60W30/14 B60W30/18 B60W50/08 |
| X | US 2010/286884 A1 (BUNN JASON ROBERT [GB]) 11 November 2010 (2010-11-11) * the whole document * ----- | 1-15 | |

TECHNICAL FIELDS
SEARCHED      (IPC)

B60W

The present search report has been drawn up for all claims

| Place of search | Date of completion of the search | Examiner |
|---|---|---|
| Munich | 24 February 2011 | Plenk, Rupert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

16

Europäisches
Patentamt

European
Patent Office

Office européen
des brevets

**EUROPEAN SEARCH REPORT**

Application Number

EP 11 15 0712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 923 291 A2 (BOSCH GMBH ROBERT [DE]) 21 May 2008 (2008-05-21) * the whole document * ----- | 1-15 | INV. B60W30/14 B60W30/18 B60W50/08 |
| X | US 2010/286884 A1 (BUNN JASON ROBERT [GB]) 11 November 2010 (2010-11-11) * the whole document * ----- | 1-15 | |

TECHNICAL FIELDS
SEARCHED     (IPC)

B60W

The present search report has been drawn up for all claims

| Place of search | Date of completion of the search | Examiner |
|---|---|---|
| Munich | 24 February 2011 | Plenk, Rupert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 15 0712

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2011

| Patent document cited in search report | | Publication date | Patent family member(s) | | Publication date |
|---|---|---|---|---|---|
| EP 1923291 | A2 | 21-05-2008 | DE 102006054327 | A1 | 21-05-2008 |
| US 2010286884 | A1 | 11-11-2010 | EP 2217481 | A1 | 18-08-2010 |
| | | | GB 2452579 | A | 11-03-2009 |
| | | | WO 2009060241 | A1 | 14-05-2009 |

EPO FORM P0459